# EUROPÄISCHE PATENTSCHRIFT

(11) **EP 1 792 780 B1**
(45) Veröffentlichungstag und Bekanntmachung des Hinweises auf die Patenterteilung: **10.02.2010**
(21) Anmeldenummer: 05090329.3
(22) Anmeldetag: 02.12.2005
(51) Int. Cl.: B60R 5/04

(54) **Klappenanordnung für Kraftfahrzeuge**
Flap arrangement for motor vehicles
Arrangement de volet pour véhicule automobile

(43) Veröffentlichungstag der Anmeldung: 06.06.2007
(73) Patentinhaber: Faurecia Innenraum Systeme GmbH, 76767 Hagenbach (DE)
(72) Erfinder: Rolain, David, 76744 Wörth am Rhein (DE)
(74) Vertreter: Pfenning, Meinig & Partner GbR

(56) Entgegenhaltungen:
- EP-A1- 1 452 393
- DE-C1- 3 405 096
- FR-A1- 2 621 541

## Beschreibung

Die vorliegende Erfindung betrifft eine Klappenanordnung für Kraftfahrzeuge.

Solche Klappenanordnungen sind beispielsweise im Heckablagenbereich von Kraftfahrzeugen verbreitet. Üblicherweise handelt es sich hierbei um einschnappbare plattenförmige Abdeckungen aus einem leichten Werkstoff, welche im Einbauzustand um eine Drehachse schwenkbar sind. An der Verschlussfläche der Klappenanordnung sind beispielsweise Schnüre gegeben, an welchen die Klappenanordnung aufgehängt ist. Diese Schnüre sind an dem anderen Ende beispielsweise mit einer Heckklappe des Kraftfahrzeugs verbunden. Beim Öffnen der Heckklappe kommt es somit zu einem automatischen Anheben der Klappenanordnung, so dass der Zugriff in den Kofferraum des Kraftzeuges ermöglicht wird. Nach dem Verschließen der Heckklappe wird durch die Klappenanordnung die Sicht in den Kofferraum versperrt. Dann ist auch eine Ablage von Gegenständen (beispielsweise einem Hut, daher auch der Name "Hutablage") möglich.

Problematisch ist allerdings, dass durch die mechanische Belastung der Klappenanordnung sowie die Anbindung an mehrere andere Bauteile (Drehachsenhalterung, Heckklappe, weitere Auflagebereiche) ein perfekter Sitz der Klappenanordnung nicht immer gewährleistet ist. Es ist von daher wichtig, zur Dämpfung, Geräuschminderung bzw. Wegbegrenzung dämpfende Elemente vorzusehen.

Sofern solche dämpfenden Elemente für eine vorgenannte Klappenanordnung bisher üblich waren, handelt es sich hierbei meist um aufgespritzte oder maschinell eingebrachte Abschnitte aus einem elastomeren Material.

Der Nachteil dieses vorbekannten Standes der Technik liegt darin, dass diese Elastomerabschnitte aus arbeitstechnischen Gründen regelmäßig mit teuren Maschinen aufgebracht werden müssen, welche die Gesamtkosten der Klappenanordnung stark erhöhen.

Eine Klappenanordnung mit den Merkmalen des Oberbegriffs des Anspruchs 1 ist aus der FR 2 621 541 A1 bekannt.

Der vorliegenden Erfindung liegt daher die Aufgabe zugrunde, eine Klappenanordnung zu schaffen, welche kostengünstig und leicht montierbar ist und dennoch höchste Ansprüche bei der Dämpfung, Geräuschminderung und Wegbegrenzung der Klappenanordnung ermöglicht.

Diese Aufgabe wird durch eine Klappenanordnung nach Patentanspruch 1 gelöst.

Dies ist eine Klappenanordnung für Kraftfahrzeuge, wobei die Klappenanordnung eine Verschlussfläche mit einer im Wesentlichen senkrecht zur Verschlussfläche stehenden Randfläche aufweist, sowie mindestens einen Dämpfer, wobei
der Dämpfer einen ersten Bereich sowie einen damit zweiten Bereich aufweist, und
der erste Bereich aus einem mechanisch widerstandsfähigen Material ist und eine Rastvorrichtung aufweist, welche die Randfläche hintergreift und
der zweite Bereich aus einem weichen Material zur Dämpfung, Geräuschminderung und Wegbegrenzung zwischen der Klappenanordnung einerseits und einem Auflagebereich des Kraftfahrzeugs andererseits besteht.

Die Aufteilung in verschiedene Bereiche, welche aus unterschiedlichem Material hergestellt sind, erleichtert die Montage erheblich. Die Rastvorrichtung erlaubt eine händische Montage, da das hier zu wählende Material leicht einschnappbar ist in eine entsprechende Öffnung bzw. Ausschnitt der Randfläche.

Das weiche Material, welches sich an den ersten angrenzt, stellt hierbei die Dämpfung, Geräuschminderung und Wegbegrenzung sicher. Vorteilhaft an diesen vorgefertigten Bauteilen ist auch, dass diese für verschiedene Klappenanordnungen universell verwendbar sein können.

Eine erfindungsgemäße Ausbildung sieht vor, dass der erste Bereich aus einem Kunststoff, nämlich Polyamid, besonders vorzugsweise PA 66 hergestellt ist.

Dieser Werkstoff hat gute federnde Eigenschaften, sichert aufgrund seiner Härte andererseits einen guten mechanischen Sitz der Rastvorrichtung. Alternativ kann der erste Bereich erfindungsgemäß auch aus Metall sein. Die Rastvorrichtung muss insgesamt so geschaffen sein, dass sie zusammen mit dem beteiligten Abschnitt der Randfläche komplementär Rastverbindungen aufweist. Es kann daher auch vorteilhaft sein, innerhalb der Randfläche Rastzungen oder dergleichen vorzusehen, welche in entsprechende Bereiche des Dämpfers eingreifen.

Erfindungsgemäß ist der zweite Bereich aus einem Kunststoff, welcher besonders dämpfende ("gummiartige") Eigenschaften hat, nämlich dem thermoplastischen Elastomer EPDM.

Vorteilhafte Weiterbildungen der vorliegenden Erfindung werden in den abhängigen Ansprüchen beschrieben.

Eine weitere vorteilhafte Weiterbildung sieht vor, dass sich der zweite Bereich (also der eigentliche Dämpfungsbereich) in der Randflächenebene und/oder in der Ebene der Verschlussfläche bzw. parallel zu dieser erstreckt. Hierdurch wird eine wahlweise Dämpfung in nur einer Raumrichtung oder auch in zwei Raumrichtungen erreicht. Erstreckt sich beispielsweise der zweite Bereich ausschließlich in der Randfläche, so wird hiermit bei einer Klappenanordnung, welche als Hutablagenanordnung ausgeführt ist, lediglich eine horizontale Dämpfung (in x-y-Ebene des Kraftfahrzeugs) erreicht. Zusätzlich bzw. alternativ kann aber auch eine Dämpfung in vertikaler Richtung erfolgen. Hierbei kann der dämpfungsaktive Bereich in der Randflächenebene bzw. in der Ebene der Verschlussfläche auch rechteckig sein. Dies ist zum einen optisch gefälliger, da hier eine entsprechende Anpassung an übliche Randflächenbereiche gegeben ist, zum anderen ist aufgrund der größeren Ausdehnung eine noch bessere Dämpfung möglich.

Verschiedene vorteilhafte Weiterbildungen befassen sich mit dem Grenzbereich zwischen dem ersten Bereich und dem zweiten Bereich. So ist es beispielsweise möglich, dass sich der erste Bereich über eine Grenzebene, also eine im Wesentlichen ebene Fläche an den zweiten Bereich anschließt. Dies ist herstellungstechnisch besonders einfach und für viele Zwecke ausreichend. Zur besseren Verkrallung des ersten und zweiten Bereiches sind jedoch Hinterschnitte zwischen beiden Bereichen sinnvoll. Besonders vorteilhaft ist, wenn der erste Bereich zumindest teilweise vom zweiten Bereich umgeben ist. Dies ist durch Umspritzen besonders leicht möglich. Prinzipiell bietet sich für die Herstellung beider oben genannten Varianten ein Zwei-Komponenten-Spritzgussverfahren an, in welchem zunächst beispielsweise der erste Bereich spritzgusstechnisch hergestellt wird und anschließend eine An- bzw. Umspritzung mit dem zweiten Bereich erfolgt.

Eine besonders vorteilhafte Weiterbildung sieht vor, dass eine Schnur an einem Ende mit dem Dämpfer verbunden ist und an dem anderen Ende der Schnur eine Anbindung, vorzugsweise mittels eines Hakens, zum Aufhängen der Klappenanordnung, beispielsweise an einer Heckklappe eines Kraftfahrzeuges, vorgesehen ist. Bei dieser besonders vorteilhaften Variante werden die Funktionen des Dämpfens und des Aufhängens der Klappe in einem einzigen Bauteil vereint. Hierdurch ist zum einen eine ästhetische Steigerung gegenüber dem Vorbekannten möglich, außerdem ist die Herstellbarkeit und Montierbarkeit deutlich erleichtert.

Die Schnur kann im Bereich ihrer Anbindung zum Dämpfer eine Verdickung zum hinterschneidenden Greifen des ersten und/oder zweiten Bereiches aufweisen. Es reicht allerdings auch üblicherweise aus, dass die Schnur einfach bereits beim Herstellen von dem ersten Bereich umspritzt wird, da sich bereits hierdurch üblicherweise ein ausreichender Halt ergibt.

Die Schnur kann aus verschiedenen Materialien hergestellt sein, beispielsweise aus "gummiartigen" Materialien wie beispielsweise Kautschuk oder EPDM. Hierdurch wird eine weitere Dämpfung der Klappe erreicht. Es ist allerdings auch möglich, im Wesentlichen dehnstarre Schnüre vorzusehen, insbesondere dann, wenn die mechanische Belastbarkeit der Schnur im Vordergrund steht.

Die erfindungsgemäße Klappenanordnung ist vorzugsweise bezüglich einer Drehachsenhalterung schwenkbar. Besonders vorzugsweise ist die Klappenanordnung in diese Drehachsenordnung einschnappbar bzw. aus dieser ausschnappbar, damit beispielsweise bei einem Umlegen der Rücksitzbank bei einem Kraftfahrzeug die Klappenanordnung zur leichteren Beladung des dann vergrößerten Laderaumes zeitweise entfernt werden kann.

Die erfindungsgemäße Klappenanordnung ist vorzugsweise eine Hutablagenanordnung oder auch eine Deckelanordnung eines Staufaches eines Kraftfahrzeuges.

Insbesondere bei der Hutablagenanordnung ist es sinnvoll, dass zumindest zwei Dämpfer zum jeweils vertikalen und/oder horizontalen Dämpfen angebracht sind. Eine besonders vorteilhafte Ausführung sieht vor, dass mindestens vier Dämpfer vorgesehen sind, wovon vorzugsweise zwei Dämpfer mit Schnüren zum Aufhängen der Klappenanordnung verbunden sind.

Weitere vorteilhafte Weiterbildungen der vorliegenden Erfindung werden in den übrigen abhängigen Ansprüchen angegeben.

Die Erfindung wird nun anhand mehrerer Figuren erläutert.

Es zeigen:
- Figur 1: eine Seitenansicht einer erfindungsgemäßen Klappenanordnung im Heckbereich eines Kompaktfahrzeuges,
- Figuren 2a und 2b: Detaildarstellungen der erfindungsgemäßen Klappenanordnung,
- Figuren 3a bis 3c: verschiedene Varianten eines ersten Dämpfers und
- Figuren 4a und 4b: ein zweiter Dämpfer, welcher mit einer Schnur zum Aufhängen verbunden ist.

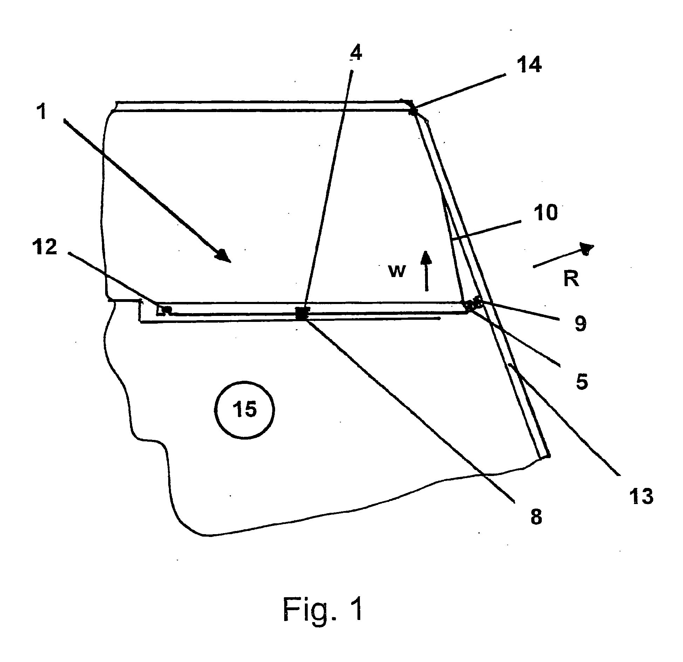

Figur 1 zeigt eine erfindungsgemäße Klappenanordnung 1, welche als Hutablagenanordnung im Heckbereich eines Kompaktfahrzeuges (bzw. SUV oder auch Kombiwagens ausgeführt ist).

Gezeigt ist in Figur 1 lediglich der Ausschnitt im hinteren oberen Bereich des Kraftfahrzeuges. Zu sehen ist hier eine Drehachsenanordnung 12, in welche die Klappenanordnung 1 einschnappbar bzw. aus dieser diese herausschnappbar ist. Die Klappenanordnung 1 ist schwenkbar gegenüber der Drehachsenanordnung 12. Das Schwenken der Klappenanordnung erfolgt, sobald die Heckklappe 13 in Richtung R aufgeschwenkt wird. Dann kommt zu einem Anheben der Heckklappenanordnung, da die Schnur 10 einerseits an der sich um die Achse 14 schwenkenden Heckklappe 13 aufgehängt ist und andererseits an der Heckklappenanordnung. Es kommt dadurch im Bereich des von der Drehachsenanordnung 12 entfernten Bereiches der Klappenanordnung 1 zu einem Anheben in Richtung W, bis in eine Endlage, in der der Laderaum 15 leicht zu beladen ist. Bei einem Schließen der Heckklappe 13 erfolgt eine Bewegung in entgegengesetzter Richtung, so dass sich wieder der in Figur 1 dargestellte Endzustand ergibt.

In diesem in Figur 1 gezeigten Endzustand liegt ein erster Dämpfer 4 auf einem ersten Auflagebereich 8 sowie ein zweiter Dämpfer 5 an einem zweiten Auflagebereich 9 an.

Im Folgenden wird insbesondere auf diese Dämpfer 4 und 5 eingegangen.

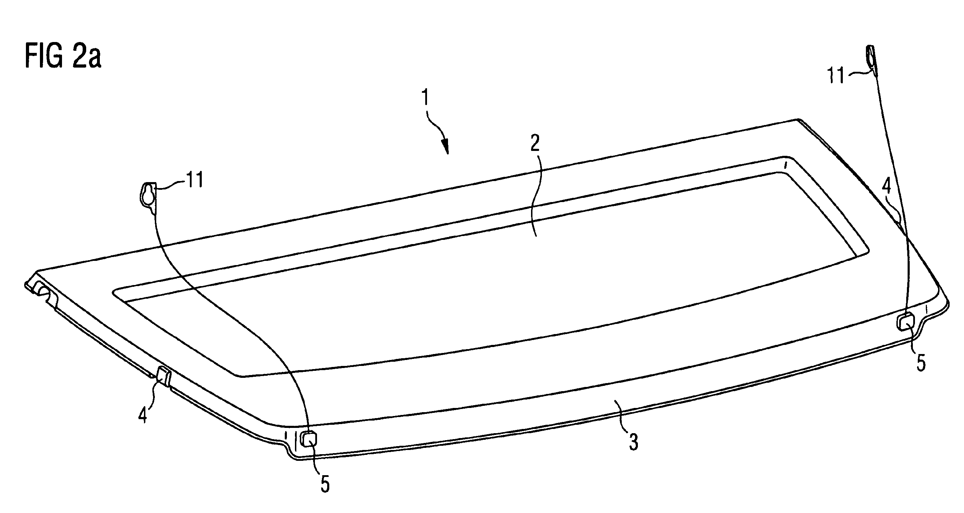

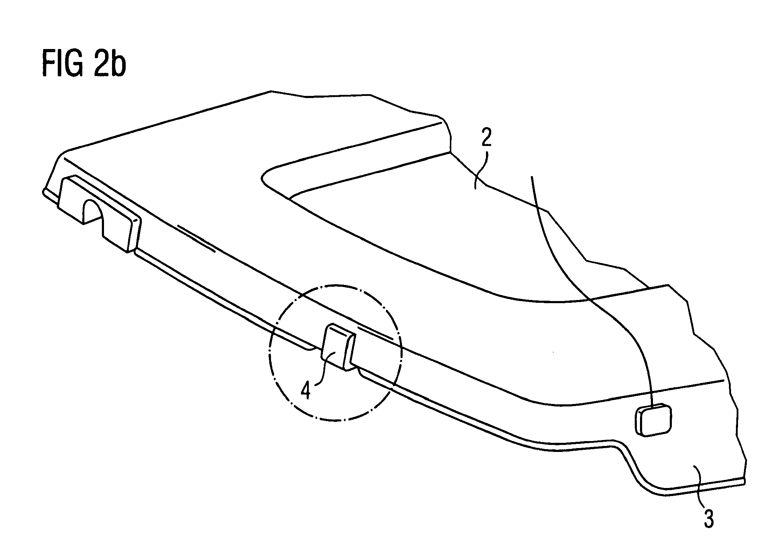

Die Figuren 2a und 2b zeigen Ansichten bzw. Details der Klappenanordnung 1.

Gezeigt ist eine Klappenanordnung 1 für Kraftfahrzeuge, wobei diese eine Verschlussfläche 2 mit einer im Wesentlichen senkrecht zur Verschlussfläche stehenden Randfläche 3 aufweist. Diese Randfläche kann, muss aber nicht umlaufend sein. Eine umlaufende Anordnung ist aus Versteifungsgründen allerdings sinnvoll. Die Klappenanordnung weist mindestens einen Dämpfer, vorliegend vier Dämpfer auf. Diese Dämpfer 4 bzw. 5 weisen jeweils einen ersten Bereich sowie einen damit verbundenen zweiten Bereich auf, wobei der erste Bereich aus einem mechanisch widerstandsfähigen Material ist und eine Rastvorrichtung aufweist, welche die Randfläche 3 jeweils hintergreift. Der zweite Bereich, welcher in Figur 2a auch nach außen hin sichtbar ist, ist aus einem weichen Material zur Dämpfung, Geräuschminderung und Wegbegrenzung zwischen der Klappenanordnung einerseits und den Auflagenbereichen 8 bzw. 9 des Kraftfahrzeuges andererseits (siehe Figur 1).

Die Klappenanordnung nach Figur 2a hat hierbei seitlich zwei Dämpfer 4 angebracht, welche mit korrespondierenden Auflagenbereichen 8 in Verbindung bringbar sind. Diese Dämpfer sind jeweils zum vertikalen und horizontalen Dämpfen ausgelegt, alternativ können sie allerdings zum ausschließlich horizontalen oder ausschließlich vertikalen Dämpfen angeordnet sein.

Insgesamt sind vier Dämpfer vorgesehen, wobei auf der der Heckklappe zuweisenden Stirnseite Dämpfer gegeben sind, welche fest mit einer Schnur zur Aufhängung verbunden sind. In einer alternativen Variante können entsprechende Schnüre allerdings auch an Dämpfern angebracht sein, welche seitlich angebracht sind, also im Bereich der Dämpfer 4.

Figur 2b zeigt ein Detail mit dem Dämpfer 4. Hierbei ist zu sehen, dass der Dämpfer in einer korrespondierenden Ausnehmung der Randfläche angebracht ist, um so zu einem ästhetisch sich besser einzufügen und zum anderen eine stabilere Verbindung herzustellen.

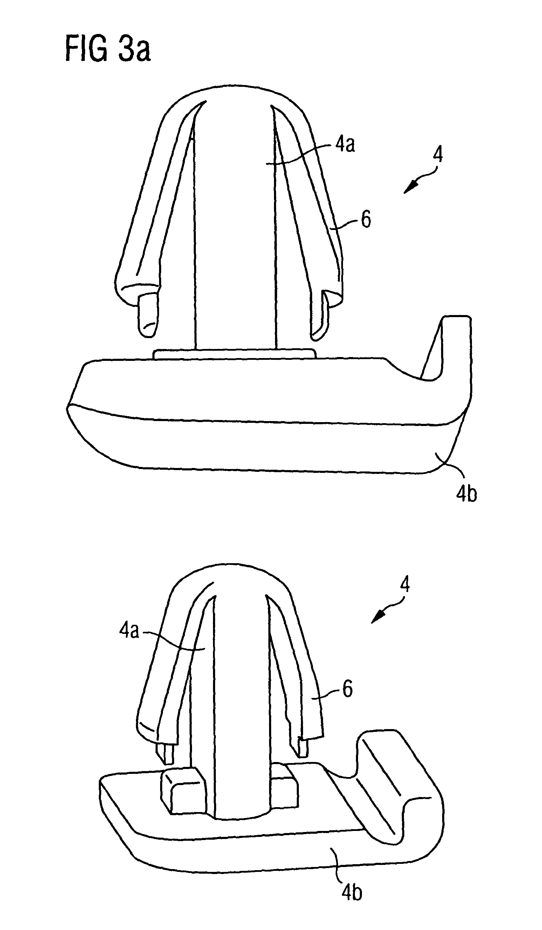

Figuren 3a bis 3c beschreiben nun näher einen Dämpfer 4.

Der Dämpfer 4 weist einen ersten Bereich 4a auf, welcher aus Polyamid ist. Innerhalb dieses Bereiches sind außerdem Rastnasen einer Rastvorrichtung 6 angebracht, welche zwei federnde Zungen zum Hintergreifen der Randfläche der Klappenanordnung zeigen. Außerdem ist an der Basis der Rastvorrichtung, zu dem zweiten Bereich 4b hin, eine zweiseitige Auswölbung gegeben, welche eine Verdrehsicherung des ersten Dämpfers 4 bezüglich der Randfläche bewirkt.

Der zweite Bereich 4b ist aus EPDM gefertigt. Es handelt sich hierbei um eine teilweise "Umspritzung" des ersten Bereiches. Diese Variante ist besonders stabil, da der erste Bereich von dem zweiten Bereich umspritzt ist, um so einen guten Halt zu erzielen.

Der in Figur 3a gezeigte Dämpfer weist einen zweiten Bereich 4b auf, welcher sowohl in der Randflächenebene als auch in der Ebene parallel Verschlussfläche sich jeweils rechteckförmig erstreckt. Es ist hierdurch eine Dämpfung sowohl in lateraler (horizontaler) also auch in vertikaler Richtung gegeben. Die rechteckförmige Form ist hierbei nicht zwingend. Durch eine Einschnürung im Randbereich zwischen beiden Rechteckflächen ist vorliegend eine noch bessere Federwirkung zwischen beiden Bereichen gegeben.

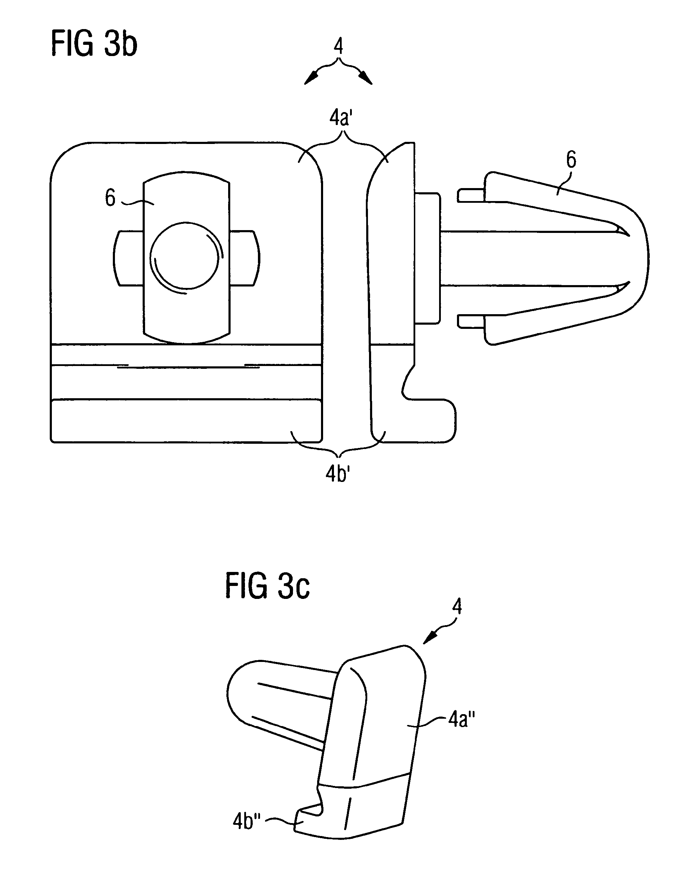

Figuren 3b bzw. 3c zeigen weitere Varianten eines ersten Dämpfers 4. Hierbei sind im Unterschied zur Ausführungsform nach Figur 3a die unten angespritzten zweiten Bereiche durch eine im Wesentlichen ebene Grenzfläche vom ersten Bereich getrennt. Hierbei ist in Figur 3b der zweite Bereich 4b' gegenüber dem zweiten Bereich 4b" aus Figur 3c deutlich größer ausgeführt, insbesondere um zur Dämpfung in horizontaler Richtung eine größere Fläche zu bieten. Der erste Bereich 4a' aus Figur 3b ist entsprechend etwas kleiner als der erste Bereich 4a" nach Figur 3c.

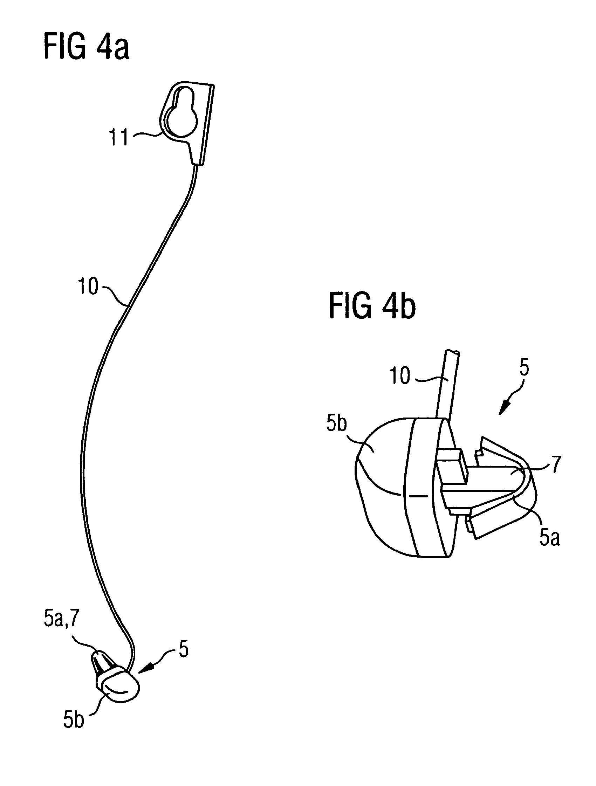

Figur 4a zeigt einen zweiten Dämpfer 5. Dieser ist mit einer Schnur 10 verbunden bzw. verschweißt. An dem anderen Ende der Schnur 10 ist ein Haken 11 angebracht, welcher zum Einhängen in eine Heckklappe eines Kraftfahrzeuges dient.

Die Schnur kann aus einem gummiartigen Material oder einem im Wesentlichen dehnstarren Material gefertigt sein.

Die Schnur ist vorliegend mit dem ersten Bereich 5a verschweißt. Alternativ ist auch eine Verschweißung mit dem zweiten Bereich 5b bzw. beiden Bereichen möglich. Bezüglich der Ausführung des ersten Bereiches sowie des zweiten Bereiches in Hinblick auf die Rastvorrichtung bzw. die Materialangaben etc. wird vollumfänglich und zur Vermeidung von Widerholungen auf das oben zu Figuren 3a bis 3c gesagten, verwiesen. Das besonders vorteilhafte dieser Variante ist, dass mit einem einzigen Bauteil, welches zudem sehr einfach in die Randfläche eingeschnappt werden kann, zum einen eine Dämpfung durch den zweiten Bereich 5b gegeben ist und zum anderen eine Aufhängung der Schnur 10 erreicht ist.

Der Dämpfer 5 ist in Figur 4b nochmals im Detail dargestellt. Hier ist unter anderem auch zu sehen, dass (in Abweichung zu dem ersten Dämpfer 4) der zweite Bereich im Wesentlichen halbzylindrisch an den ersten Bereich angefügt ist. Diese Rundung ist günstig, da auch bei einer Schwenkbewegung der Heckklappe stets ein guter Kontakt zum zweiten Bereich 5b gegeben ist. Die Schnur ist von dem ersten Bereich (welcher auch wieder aus PA 66 ist) umspritzt und daher fest mit wieder aus PA 66 ist) umspritzt und daher fest mit diesem verbunden. Der zweite Bereich 5b, welcher auch wieder aus EPDM ist, dient primär der horizontalen Dämpfung, allerdings ist durch die gerundete Struktur auch gleichzeitig eine vertikale Dämpfung möglich, je nach Neigung der entsprechenden Heckklappe bzw. der Randfläche.

Abschließend sei gesagt, dass die vorliegende Erfindung nicht zwingend auf Hutablagen beschränkt ist, sondern jegliche Deckelanordnungen bzw. Klappenanordnungen, insbesondere in Kraftfahrzeugen, umfassen kann. Auch der Randbereich muss nicht zwingend senkrecht zur Verschlussfläche in dem Sinne sein, dass hier genau 90° zwischen den Ebenen gegeben sind. Gemeint ist hierbei, dass die Verschlussfläche einerseits im Wesentlichen eine Ebene darstellen soll und die Randfläche hierzu in einem Winkel zwischen 60 und 120° vorzugsweise zwischen 80° und 100° angeordnet sein soll.

## Patentansprüche

1. Klappenanordnung (1) für Kraftfahrzeuge, wobei die Klappenanordnung eine Verschlussfläche (2) mit einer im wesentlichen senkrecht zur Verschlussfläche stehenden Randfläche (3) aufweist sowie mindestens einen Dämpfer (4,5), wobei
der Dämpfer (4,5) einen ersten Bereich (4a, 5a) sowie einen damit verbundenen zweiten Bereich (4b,5b) aufweist, und
der erste Bereich (4a,5a) eine Rastvorrichtung (6,7) aufweist, welche die Randfläche (3) hintergreift und
der zweite Bereich (4b,5b) aus einem weichen Material zur Dämpfung, Geräuschminderung und Wegbegrenzung zwischen der Klappenanordnung einerseits und einem Auflagebereich (8,9) des Kraftfahrzeugs andererseits besteht,
**dadurch gekennzeichnet,**
**dass** der erste Bereich aus einem mechanisch widerstandsfähigen Material, nämlich aus Polyamide oder Metall ist, und der zweite Bereich aus EPDM ist und der Dämpfer zur besseren ästhetischen Einfügung und zur Sicherstellung einer stabilen Verbindung in einer korrespondierenden Ausnehmung der Randfläche angebracht ist.

2. Klappenanordnung nach Anspruch 1,
**dadurch gekennzeichnet, dass** sich der zweite Bereich (4b,5b) in der Ebene der Randfläche (3) oder parallel zur verschlussfläche (2) erstreckt.

3. Klappenanordnung nach Anspruch 2,
**dadurch gekennzeichnet, dass** der dämpfungsaktive Bereich der Ebene der Randfläche und/oder der Ebene der Verschlussfläche im wesentlichen rechteckförmig ist.

4. Klappenanordnung nach einem der vorhergehenden Ansprüche,
**dadurch gekennzeichnet, dass** sich der erste Bereich (4a') über eine Grenzebene an den zweiten Bereich (4b') anschließt.

5. Klappenanordnung nach einem der vorhergehenden Ansprüche,
**dadurch gekennzeichnet, dass** der erste Bereich (5a) zumindest teilweise vom zweiten Bereich (5b) umgeben ist.

6. Klappenanordnung nach einem der vorhergehenden Ansprüche,
**dadurch gekennzeichnet, dass** eine Schnur fest mit einem Ende an einem Dämpfer (5) und mit einem anderen Ende mit einem Haken (11) zum Aufhängen der Klappenanordnung verbunden ist.

7. Klappenanordnung nach Anspruch 6,
**dadurch gekennzeichnet, dass** die Schnur (10) im Endbereich eine Verdickung zum hinterschneidenden Greifen des ersten und/oder zweiten Bereich aufweist.

8. Klappenanordnung nach einem der Ansprüche 6 oder 7,
**dadurch gekennzeichnet, dass** die Schnur (10) fest mit dem ersten (5a) und/oder zweiten Bereich (5b) verbunden ist.

9. Klappenanordnung nach einem der vorhergehenden Ansprüche,
**dadurch gekennzeichnet, dass** die Klappenanordnung (1) eine Hutablagenanordnung oder eine Deckelanordnung eines Staufachs eines Kraftfahrzeugs ist.

10. Klappenanordnung nach einem der Ansprüche 6 bis 9,
**dadurch gekennzeichnet, dass** die Schnur aus einem gummiartigen oder im Wesentlichen dehnstarren Material ist.

11. Klappenanordnung nach einem der vorhergehenden Ansprüche,
**dadurch gekennzeichnet, dass** diese bezüglich einer Drehachsenhalterung (12) schwenkbar ist.

12. Klappenanordnung nach Anspruch 11,
**dadurch gekennzeichnet, dass** diese in die Drehachsenanordnung einschnappbar und/oder aus dieser ausschnappbar ist.

13. Klappenanordnung nach einem der vorhergehenden Ansprüche,
**dadurch gekennzeichnet, dass** diese zumindest zwei Dämpfer zum jeweils vertikalen und/oder horizontalen Dämpfen aufweist.

14. Klappenanordnung nach einem der vorhergehenden Ansprüche,
**dadurch gekennzeichnet, dass** diese mindestens vier Dämpfer aufweist, wobei zwei der Dämpfer mit Schnüren zum Aufhängen der Klappenanordnung verbunden sind.

## Claims

1. A flap arrangement (1) for motor vehicles, wherein the flap arrangement has a closure face (2) with an edge face (3) substantially at a right angle to the closure face, as well as at least one damper (4, 5), wherein the damper (4, 5) has a first region (4a, 5a) and a second region (4b, 5b) joined thereto, and the first region (4a, 5a) has a catch device (6, 7) which engages under the edge face (3), and the second region (4b, 5b) consists of a soft material for damping, noise reduction and path delimitation between the flap arrangement on the one hand and a support region (8, 9) of the motor vehicle on the other hand, **characterized in that** the first region is formed from a mechanically resistant material, namely from polyamide or metal, and the second region is formed from EPDM, and the damper is attached in a corresponding recess in the edge face for an improved aesthetic insertion and in order to ensure a stable join.

2. A flap arrangement according to Claim 1, **characterized in that** the second region (4b, 5b) extends in the plane of the edge face (3) or parallel to the closure face (2).

3. A flap arrangement according to Claim 2, **characterized in that** the damping-active region of the plane of the edge face and/or of the plane of the closure face is substantially rectangular.

4. A flap arrangement according to any one of the preceding Claims, **characterized in that** the first region (4a') adjoins the second region (4b') by way of a boundary plane.

5. A flap arrangement according to any one of the preceding Claims, **characterized in that** the first region (5a) is surrounded at least in part by the second region (5b).

6. A flap arrangement according to any one of the preceding Claims, **characterized in that** a cord is joined in a fixed manner at one end to a damper (5) and at the other end to a hook (11) in order to suspend the flap arrangement.

7. A flap arrangement according to Claim 6, **characterized in that** the cord (10) has a thickening in the end region in order to grip the first and/or second region in an undercut manner.

8. A flap arrangement according to one of Claims 6 or 7, **characterized in that** the cord (10) is joined to the first region (5a) and/or the second region (5b) in a fixed manner.

9. A flap arrangement according to any one of the preceding Claims, **characterized in that** the flap arrangement (1) is a rear-parcel-shelf arrangement or a lid arrangement of a storage compartment of a motor vehicle.

10. A flap arrangement according to any one of Claims 6 to 9, **characterized in that** the cord is formed from a rubber-like or substantially non-extensible material.

11. A flap arrangement according to any one of the preceding Claims, **characterized in that** it is pivotable with respect to a pivot-axle holding means (12).

12. A flap arrangement according to Claim 11, **characterized in that** it is capable of being snapped into the pivot-axle arrangement and/or out of it.

13. A flap arrangement according to any one of the preceding Claims, **characterized in that** it has at least two dampers in order to damp vertically and/or horizontally in each case.

14. A flap arrangement according to any one of the preceding Claims, **characterized in that** it has at least four dampers, wherein two of the dampers are connected to cords in order to suspend the flap arrangement.

## Revendications

1. Dispositif abattant (1) pour des véhicules à moteur, dispositif abattant comportant une surface de fermeture (2), avec une surface de bordure (3) se trouvant sensiblement perpendiculaire à la surface de fermeture, ainsi qu'au moins un amortisseur (4, 5), l'amortisseur (4, 5) comportant une première partie (4a, 5a) ainsi qu'une deuxième partie (4b, 5b) reliée à cette dernière, et
la première partie (4a, 5a) comportant un dispositif d'encliquetage (6, 7) qui prend en contre-dépouille la surface de bordure (3) et
la deuxième partie (4b, 5b) consistant en un matériau souple pour l'amortissement, l'insonorisation et la limitation de course entre le dispositif abattant d'une part et une partie d'appui (8, 9) du véhicule à moteur d'autre part,
**caractérisé en ce que**
la première partie est en un matériau mécaniquement résistant, en l'occurrence en polyamide ou en métal, et la deuxième partie est en EPDM, et **en ce que**, pour une meilleure incorporation esthétique et pour l'assurance d'une liaison stable, l'amortisseur est monté dans un évidement correspondant de la surface de bordure.

2. Dispositif abattant selon la revendication 1, **caractérisé en ce que** la deuxième partie (4b, 5b) s'étend dans le plan de la surface de bordure (3) ou parallèlement à la surface de fermeture (2).

3. Dispositif abattant selon la revendication 2, **caractérisé en ce que** la partie à effet d'amortissement du plan de la surface de bordure et/ou du plan de la surface de fermeture est sensiblement rectangulaire.

4. Dispositif abattant selon l'une quelconque des revendications précédentes, **caractérisé en ce que** la première partie (4a') se raccorde à la deuxième partie (4b') par un plan limite.

5. Dispositif abattant selon l'une quelconque des revendications précédentes, **caractérisé en ce que** la première partie (5a) est au moins partiellement entouré de la deuxième partie (5b).

6. Dispositif abattant selon l'une quelconque des revendications précédentes, **caractérisé en ce qu'**un cordon est relié de façon fixe par une extrémité à un amortisseur (5) et par une autre extrémité à un crochet (11) destiné à suspendre le dispositif abattant.

7. Dispositif abattant selon la revendication 6, **caractérisé en ce que** le cordon (10) comporte dans sa partie d'extrémité un renflement pour une prise par contre-dépouille de la première et/ou de la deuxième partie.

8. Dispositif abattant selon l'une quelconque des revendications 6 ou 7, **caractérisé en ce que** le cordon (10) est relié de façon fixe à la première (5a) et/ou à la deuxième partie (5b).

9. Dispositif abattant selon l'une quelconque des revendications précédentes, **caractérisé en ce que** le dispositif abattant (1) est un dispositif de plage arrière ou un dispositif de couvercle d'un compartiment de rangement d'un véhicule à moteur.

10. Dispositif abattant selon l'une quelconque des revendications 6 à 9, **caractérisé en ce que** le cordon est en un matériau de la nature du caoutchouc ou en un matériau sensiblement rigide en extension.

11. Dispositif abattant selon l'une quelconque des revendications précédentes, **caractérisée en ce que** celui-ci est basculant par rapport à une fixation à axe de rotation (12).

12. Dispositif abattant selon la revendication 11, **caractérisé en ce que** celui-ci est encliquetable dans le dispositif à axe de rotation et/ou est décliquetable de ce dernier.

13. Dispositif abattant selon l'une quelconque des revendications précédentes, **caractérisé en ce que** celui-ci comporte au moins deux amortisseurs pour l'amortissement vertical et/ou horizontal respectivement.

14. Dispositif abattant selon l'une quelconque des revendications précédentes, **caractérisé en ce que** celui-ci comporte au moins quatre amortisseurs, deux desamortisseurs étant reliés à des cordons servant à suspendre le dispositif abattant.
